Europäisches Patentamt

European Patent Office

Office européen des brevets

(11) Publication number: **0 325 292**
**A2**

# EUROPEAN PATENT APPLICATION

(21) Application number: 89101010.0

(51) Int. Cl.⁴: **B29C 67/14 , B29B 15/14 ,**
**//B29L7:00**

(22) Date of filing: 20.01.89

(30) Priority: 20.01.88 IT 1913088

(43) Date of publication of application:
26.07.89 Bulletin 89/30

(84) Designated Contracting States:
AT BE CH DE ES FR GB LI NL SE

(71) Applicant: MONTEDIPE S.p.A.
31, Foro Buonaparte
I-20121 Milan(IT)

(72) Inventor: Addeo, Antonio
35, Via Scala
S. Paolo Belsito Nola(Naples)(IT)
Inventor: Cocca, Vincenzo
53, Via Dante
Cormano (Milan)(IT)
Inventor: Rossi, Carlo
6, Via Palestro
Olgiate Olona (Varese)(IT)
Inventor: Saccardi, Stefano
4, Via Mussi
I-20154 Milan(IT)
Inventor: Zentile, Antonio
28, Via S. Pietro
Paderno Dugnano (Milan)(IT)
Inventor: Fiore, Leonardo
46, Via Do Lemene
I-20181 Milan(IT)

(74) Representative: Barz, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
D-8000 München 40(DE)

(54) **Process for the continuous production of stiffened, thermomoldable, thermoplastic sheets and apparatus for carrying out said process.**

(57) A process for the continuous production of stiffened, thermomoldable, thermoplastic sheets is described which comprises:

a) Feeding to an extrusion head at least one thermoplastic polymer in the fluid state and at least one reinforcement of fibrous material;

b) Impregnating the reinforcement with the thermoplastic polymer inside the extrusion head;

c) Compacting the obtained material by extrusion; and

d) Calibrating and hardening the sheet by calendering and cooling it.

EP 0 325 292 A2

# PROCESS FOR THE CONTINUOUS PRODUCTION OF STIFFENED, THERMOMOLDABLE, THERMOPLASTIC SHEETS AND APPARATUS FOR CARRYING OUT SAID PROCESS

The present invention relates to a process for the continuous production of stiffened, thermomoldable, thermoplastic sheets.

More particularly, the present invention relates to a process for the continuous production of stiffened, thermomoldable, thermoplastic sheets and to an apparatus suitable for carrying out said process.

The production of sheets which have, for instance, been stiffened by means of glass fibres and which are capable of being subsequently thermomolded, by applying heat and by subjecting them to compression, into finished articles of various shapes, has already been described in the art.

Typical methods and processes for obtaining such sheets are, for instance, described in EP-A-9 991 or in DE-A-29 48 235.

According to the disclosure of said patents, composite sheets can be prepared by disposing stiffened layers, generally consisting of glass fibres in the form of small matresses or mats, between previously extruded layers of thermoplastic polymer. In these stiffening layers the fibres, which may be either cut or continuous, are held together by needling or by means of chemical binders which also contain organofunctional silanes capable of establishing a good chemical bond at the interface between fibres and polymeric matrix.

The panel thus obtained is compressed under application of heat to cause the migration of the molten polymer into the stiffened layers. Thereafter, the panel is cooled, whereby the hardened sheet can be cut according to the desired shape and size.

According to alternative methods, for example, those described in GB-A-1 010 043, FR-A-1 361 439 or US-A-3 396 142, stiffened, thermomoldable, thermoplastic sheets may be obtained by continuously placing glass fibres and powdered thermoplastic polymer onto a conveyor belt and by subjecting the whole mixture to heating and compression operations so as to obtain a thorough distribution of the reinforcement in the polymer matrix.

In this case, too, a composite material is obtained which is hardened by cooling and, thereafter, is cut according to the desired shape.

All of the above-mentioned processes have drawbacks, both from a hygienic-environmental point of view owing to the emission of smoke, powders or fragments of glass fibres and, in economic respect, since their operation requires expensive equipment and, consequently, high investment costs.

The applicant has now found a process for the continuous production of sheets of stiffened thermoplastic polymers, which process avoids the above-mentioned drawbacks. Said process is very advantageous from an economic, environmental and technical point of view since, at the same rate of production as in the processes mentioned above, sheets may be obtained, which show an improved distribution of the fibrous material and are more homogeneous due to the greatly reduced amount of air trapped therein as evidenced by their high density (about 98% of the theoretical value).

Therefore, an object of the present invention is a process fo the continuous production of stiffened, thermomoldable, thermoplastic sheets which comprises the steps of:

a) Feeding to an extrusion head at least one thermoplastic polymer in the fluid state and at least one reinforcement of fibrous material;

b) Impregnating the reinforcement with the thermoplastic polymer inside the extrusion head;

c) Compacting the composite material obtained by extrusion; and

d) Calibrating and hardening the sheet by calendering and cooling it.

The term "reinforcement of fibrous material" as used herein refers to structures of fibres which are unidirectional, isotropic, partly isotropic, continuous or cut, woven or not woven, sized or not sized, which contain or do not contain chemical binders.

According to a preferred embodiment of the process of the present invention, the reinforcement of fibrous material can be obtained from strands of natural, artificial or synthetic fibres such as glass fibres, rock fibres, aramidic fibres, carbon fibres, cellulosic fibres, asbestos fibres, acrylonitrile fibres etc. Glass fibres are, however, being preferred.

The strands used for producing the reinforcement employed in the process of the present invention consist of a plurality of (individual) monofilament threads and, generally, have a count ranging from 10 to 26 tex.

The diameter of each individual thread preferably, but not necessarily, ranges from 8 to 20 $\mu$m. Values of about 11.5 $\mu$m are even more preferred.

Any thermoplastic polymer such as low, middle or high density polyethylene (polythene), polypropylene, ethylene/propylene copolymers, poly-butene-1, poly-4-methyl-1-pentene, polystyrene, high-impact polystyrene, polystyrene modified with polar monomers such as acrylonitrile and polyvinylchloride, or ABS resins (acrylonitrile-butadiene-styrene), AES resins (acrylonitrile, EPDM, styrene), polyamides, acrylic and methacrylic resins, polymethacrylates, polycarbonates, polyphenylene ethers, polyesters such as polyethylene terephthalate, polybutylene terephthalate or alloys thereof, etc., may be used for the composite sheets produced by the process of the present invention. Olefinic polymers are, however the preferred ones.

The polymer may also contain additives such as antistatic agents, dyes, nucleating agents, pigments, stabilizers, flame retardants, mineral or organic fillers which are added in order to improve the mechanic, aesthetic of flame-retardant properties of the finished sheet.

The polymer is, preferably, used in amounts of from 5 to 80% by weight, based on the total mixture and, particularly, in amounts ranging from 10 to 70%.

The impregnation and compacting operations, which are carried out by means of an extrusion head equipped with at least one feeding duct and with a single outlet port, take place with the polymer in the fluid state so as to achieve a homogeneous distribution inside the reinforcement during the extrusion process.

To this end, the reinforcement can be preheated to a temperature lower than the melting temperature of the thermoplastic material in order to avoid possible cooling of the polymer during the impregnation process.

The sheet which is taken off the extrusion head is passed to a calender where it is further compacted and calibrated. It is then passed to a cooling section and may thereafter be cut and stored. Alternatively, the two operations can be combined in a single three- or more roller-calender, where the calibration and cooling operations are carried out progressively and continuously.

According to a preferred embodiment of the process of the present invention, two reinforcements of fibrous material are fed to the extrusion head through different inlets, whereas the thermoplastic polymer is fed through three ducts with preferably exactly the same flow rates and in such a way that said polymer wets each surface of each piece of reinforcement.

According to a further preferred embodiment of the process of the present invention finishing films of the same type as the impregnating polymer or different therefrom can be coupled to at least one surface of the sheet leaving the extrusion head if it is desired to obtain sheets with a superior surface appearance. Such a finishing operation is generally carried out during the calendering step.

The apparatus for the continuous production of the stiffened, thermomoldable, thermoplastic sheets comprises:

1. A means for feeding at least one reinforcement of fibrous material;

2. An extrusion head, equipped with at least one feeding duct and with a single outlet port, capable of receiving at least one reinforcement of fibrous material and at least one thermoplastic polymer in the fluid state, fed by at least one extruder;

3. Calendering rollers arranged at the outlet of the extrusion head;

4. Cooling rollers; and

5. Drawing frame rollers for conveying the composite sheet.

Any means capable of feeding the fibrous reinforcement may be used in the apparatus of the present invention although frictioned uncoiling rollers are, generally, used most frequently.

The extruder may be of the type which is generally used for the transformation of plastic materials. Examples of suitable extruders are single-screw, double-screw, tandem extruders etc.

The extrusion head is preferably equipped with two ducts for feeding two reinforcements of fibrous material and with three ducts for feeding the thermoplastic polymer in order to facilitate the coupling of the polymer to each surface of each mat.

The indicated number of inlet ports into the extrusion head is merely exemplary and varies as a function of the requirements and the particular type of desired sheet.

As the impregnation of one or more reinforcements occurs inside the extrusion head and the compacting of the composite occurs through the outlet port, the head is, preferably, kept at a temperature higher than the melting temperature of the polymer in order to avoid a possible cooling thereof.

The calendering rollers are also heated in such a way that the outer surfaces thereof are at a temperature lower than the melting temperature of the polymer in order to facilitate the calibration of the composite, whereas the outer surfaces of the cooling rollers are thermoregulated by means of a cooling fluid.

According to a preferred embodiment of the apparatus of the present invention, the calendering rollers and cooling rollers are arranged in only one calender having at least three rollers. Generally, four roller calenders may be used as well.

The construction and function of the apparatus of the present invention will be better understood by referring to the following detailed description, in which reference is made to the attached drawings which illustrate preferred embodiments of the present invention and wherein:

Fig. 1 represents a sectional lateral view of the apparatus according to the present invention; and

Fig. 2 represents a sectional lateral view of the extrusion head.

The apparatus of the present invention comprises:

An extruder (1), equipped with a feed tank (2) for the thermoplastic polymer, an extrusion head (3), a three-roller-calender comprising two calibration rollers (4) and one cooling roller (5), drawing frame rollers (6), arranged in a supporting structure (8) and a cutting section (7).

The apparatus of the present invention, moreover, comprises rollers (9) for feeding reinforcements (10) and transmission rollers (11) for adjusting the feeding direction, supporting structures (12) for rollers (11), an electric motor (13) connected to one of the calender rollers by means of a suitable belt, a supporting element (14), containing the calender and the electric motor and a conveyor belt (15), connecting the calender to the drawing section. Along said belt (15), a further cooling of the thermomoldable thermoplastic composite sheet (16) occurs.

The extrusion head (3) comprises two bodies (3′) and (3″), defining two inlet ducts for the reinforcements (10). In body (3′), one feeding duct (18) for the molten polymer is provided whereas, in body (3″), two feeding ducts (19) are present.

The extrusion head is equipped with a single outlet port (20), through which the composite sheet (16) is extruded and compacted.

The thermoplastic polymer introduced into extruder (1) through feed tank (2), after having been heated and molten, is conveyed to extrusion head (3) through feeding ducts (18) and (19). Two reinforcements (10) of fibrous material, uncoiled by rollers (9) and fed through ducts (17), are passed to said head.

Inside the extrusion head the reinforcement is homogeneously penetrated by the molten polymer, whereas the compacting of the impregnated material is achieved by extrusion of the composite through outlet port (20).

Particularly, the extrusion head can be subdivided into four sections, inside every single one of which a well-defined operation is carried out.

In the first section, (A), the feeding of the reinforcement(s) and a first portion of molten polymer, is carried out.

In the second section, (B), a first impregnation (inner impregnation) of the reinforcement(s) takes place.

In the third section, (C), the impregnation of the reinforcement(s) is completed by feeding more molten polymer.

In the fourth section, (D), the impregnated material is compacted by extruding it through the outlet port.

The composite sheet leaving the extrusion head is conveyed to the calendering section (where it is calibrated and cooled) and, subsequently, to the cutting section where it is cut according to the desired shape and size.

When carrying out the present invention several changes, modifications and variations can be made in the various parts of the apparatus for the continuous production of thermomoldable, thermoplastic, composite sheets as illustrated, by way of example, in the figures of the attached drawings without leaving the scope of the invention.

The following examples serve to illustrate the present invention without being a limitation thereof.

EXAMPLE 1

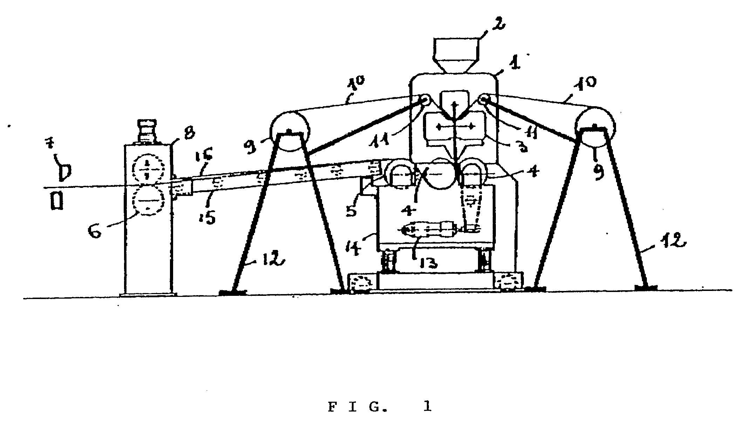

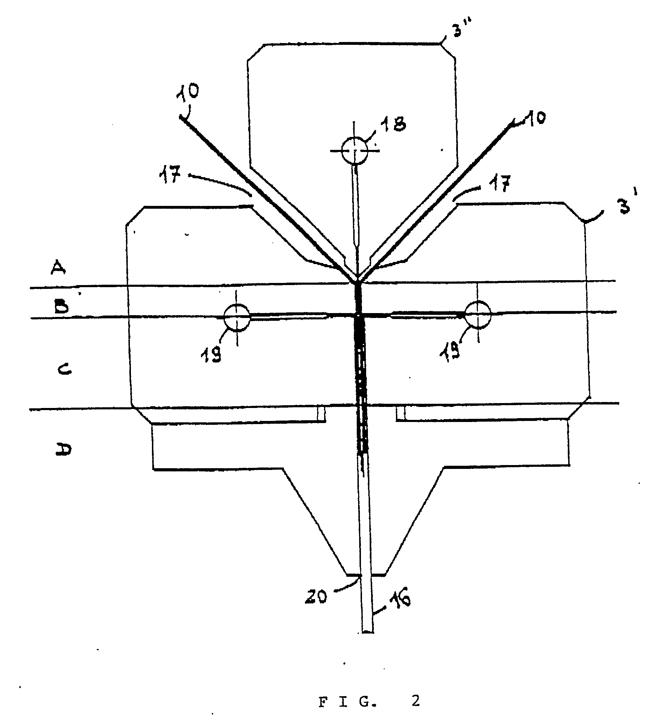

Sheets, stiffened with 40% by weight of glass fibres and based on polypropylene resin, were produced by using the apparatus illustrated in Fig. 1 and the extrusion head illustrated in Fig. 2 under the following conditions:

Two reinforcements of glass fibres, type E, in the form of an unwoven fabric and having a width of 600 mm, a plane isotropic random structure and a titre of 450 tex, were employed.

The extrusion conditions were as follows:

Fed polymer = polypropylene in flakes, mixed with Luperco(R) 101 (a peroxide available from the Carbocrom Company) for increasing the melt flow index (MFI) to values of about 100;

Flow rate = 40 kg/h, subdivided equally among the three inlets of the extrusion head;

4

Feeding temperature = 200° C;
Melting temperature = 230° C;
Temperature of the extrusion head = 250° C;
Tip speed of the calender rollers = 0.5 m/min.

An even sheet (600 mm wide and 3 mm thick), having isotropic characteristics along the three main axes, a density of 1.2 g/cm³ and a specific weight of 3600 g/m² was thus obtained.


EXAMPLE 2

Sheets, stiffened with 30% by weight of glass fibres, type E, were prepared by using, as polymeric matrix, polyethylene terephthalate, available from the AKZO Company under the tradename ARNITE[R].

The procedure described in example 1 was followed except for the following temperatures concerning the extruder:
Feeding temperature = 220° C;
Melting temperature = 240° C;
Temperature of the extrusion head = 260° C.

An even sheet (600 mm wide and 3 mm thick), having isotropic characteristics along the three main axes, a density of 1.6 g/cm³ and a specific weight of 4800 g/m² was thus obtained.


EXAMPLE 3

Sheets, stiffened with 40% by weight of glass fibres, type E, were prepared by using, as polymeric matrix, polyamide 6, available from the SNIA Company under the tradename SNIAMID[R].

The procedure described in example 1 was followed, except for the following temperatures concerning the extruder:
Feeding temperature = 210 to 220° C;
Melting temperature = 240 to 250° C;
Temperature of the extrusion head = 250 to 260° C.

An even sheet (600 mm wide and 3 mm thick), having isotropic characteristics along the three main axes, a density of 1.4 g/cm³ and a specific weight of 4200 g/m² was thus obtained.


EXAMPLE 4

Sheets, stiffened with 30% by weight of glass fibres, type E, were prepared by using, as polymeric matrix, polybutylene terephthalate, available from applicant under the tradename PIBITER[R]100.

The procedure of example 1 was followed, except for the following temperatures concerning the extruder:
Feeding temperature = 210 to 220° C;
Melting temperature = 230 to 240° C;
Temperature of the extrusion head = 240° C.

An even sheet (600 mm wide and 3 mm thick), having isotropic characteristics along the three main axes, a density of 1.6 g/cm³ and a specific weight of 4800 g/m² was thus obtained.

The physical properties of the sheets of examples 1 to 4 are set out in the following table.

TABLE

| EXAMPLES | 1 | 2 | 3 | 4 | ASTM |
|---|---|---|---|---|---|
| Physicomechanical properties | | | | | |
| Flexural modulus (kg/cm$^2$) | 55000 | 100000 | 120000 | 100000 | D 790 |
| Impact strength IZOD (kgcm/cm) | 60 | 80 | 120 | 75 | D 256 |
| Resistance to tensile stress (kg/cm$^2$) | 800 | 1250 | 2000 | 1800 | D 638 |
| Elongation (%) | 2 | 2 | 2 | 2 | D 638 |
| Temperature of deflection under load (°C) | 155 | 210 | 200 | 210 | D 648 |
| Coefficient of linear thermal expansion (1/°C) | $2.5 \times 10^{-5}$ | $2.4 \times 10^{-5}$ | $2.5 \times 10^{-5}$ | $3.10^{-5}$ | D696 |

**Claims**

1. Process for the continuous production of stiffened thermomoldable, thermoplastic sheets, comprising the following steps:

a) Feeding to an extrusion head at least one thermoplastic polymer in the fluid state and at least one reinforcement of fibrous material;

b) Impregnating the reinforcement with the thermoplastic polymer inside the extrusion head;

c) Compacting the obtained material by extrusion; and

d) Calibrating and hardening the sheet by calendering and cooling it.

2. Process according to claim 1, wherein the reinforcement of fibrous material is derived from strands of natural, artificial or synthetic fibres such as glass fibres, rock fibres, aramidic fibres, carbon fibres, cellulosic fibres, asbestos fibres and acrylonitrile fibres and, preferably, is derived from strands of glass fibres.

3. Process according to any one of the preceding claims, wherein the polymer is employed in amounts of from 5 to 80% by weight, based on the entire composite, and preferably in amounts of from 10 to 70%.

4. Process according to any one of the preceding claims, wherein two reinforcements of fibrous material are fed to the extrusion head through different inlets, while the thermoplastic polymer is fed through three ducts with preferably exactly the same flow rate and in such a way that said polymer wets each surface of each reinforcement.

5. Process according to any one of the preceding claims, wherein a finishing film is coupled to at least one surface of the sheet leaving the extrusion head.

6. Apparatus for the continuous production of stiffened, thermomoldable, thermoplastic sheets comprising:

a) Means for feeding at least one reinforcement of fibrous material;

b) An extrusion head, equipped with at least one feeding duct and one outlet port, capable of receiving at least one reinforcement of fibrous material and at least one thermoplastic polymer in the fluid state, fed from at least one extruder;

c) Cooling rollers; and

d) Drawing frame rollers for conveying the composite sheet.

7. Apparatus according to claim 6, wherein the means for feeding the reinforcement of fibrous material comprises frictioned uncoiling rollers.

8. Apparatus according to claims 6 or 7, wherein the extrusion head is equipped with two ducts for feeding two reinforcements of fibrous material and with three ducts for feeding the thermoplastic polymer.

9. Apparatus according to any one of claims 6 to 8, wherein the extrusion head is kept at a temperature higher than the melting temperature of the polymer.

10. Apparatus according to any one of claims 6 to 9, wherein the calendering rollers and the cooling rollers are comprised in only one calender having at least three rollers.

6

F I G.  1

EP 0 325 292 A2

F I G. 2